# EUROPEAN PATENT APPLICATION

(11) **EP 4 660 775 A1**
(43) Date of publication of application: **10.12.2025**
(21) Application number: 25155743.5
(22) Date of filing: 04.02.2025
(51) Int. Cl.: G06F 3/12, H04N 1/00

(54) **INFORMATION PROCESSING SYSTEM AND PROGRAM**

(30) Priority: 03.06.2024 JP 2024090231
(71) Applicant: FUJIFILM Business Innovation Corp., Minato-ku Tokyo (JP)
(72) Inventor: NISHIMAKI, Taisei, Yokohama-shi, Kanagawa (JP)
(74) Representative: Kurig, Thomas

(57) **Abstract**

An information processing system includes a processor configured to receive, from a server on outside, processing information of print processing requested by a user to the server and store the processing information, transmit the processing information to a printer in response to an instruction from the printer, and when a failure has occurred in a communication between the information processing system and the server, transmit a notification indicating that the failure has occurred to the printer and thus notify the printer that the failure has occurred.

## Description

### Background

### (i) Technical Field

The present disclosure relates to an information processing system and a program.

### (ii) Related Art

Japanese Unexamined Patent Application Publication No. 2013-025383 discloses an information processing system that, in a system using a cloud, suppresses a decrease in the convenience of users when a fault has occurred in the access to the cloud.

Japanese Unexamined Patent Application Publication No. 2022-073284 discloses a server system that, in cloud printing to execute printing using a printing system on a cloud, is capable of receiving a notification of an error that has occurred in a device.

### Summary

Accordingly, it is an object of the present disclosure to provide an information processing system and a program capable of causing a user operating a printer to recognize that a failure has occurred in the communication with a server in an information processing system that receives, from the server, processing information of print processing requested by the user, stores the processing information, and transmits the processing information to the printer in response to an instruction from the printer.

According to a first aspect of the present disclosure, there is provided an information processing system including a processor configured to: receive, from a server on outside, processing information of print processing requested by a user to the server and store the processing information; transmit the processing information to a printer in response to an instruction from the printer; and when a failure has occurred in a communication between the information processing system and the server, transmit a notification indicating that the failure has occurred to the printer and thus notify the printer that the failure has occurred.

According to a second aspect of the present disclosure, in the information processing system according to the first aspect, the processor may be configured to, when the failure has occurred, refer to user information regarding a user who has logged in to the printer and determine whether to transmit the notification to the printer.

According to a third aspect of the present disclosure, in the information processing system according to the second aspect, the processor may be configured to, when the failure has occurred, transmit the notification to the printer only in a case where a user who has requested the server to perform processing in the past has logged in to the printer.

According to a fourth aspect of the present disclosure, in the information processing system according to any one of the first to third aspects, the processor may be configured to transmit the notification only to a specific printer among a plurality of the printers connected to the information processing system.

According to a fifth aspect of the present disclosure, in the information processing system according to any one of the first to third aspects, the processor may be configured to transmit the notification only to the printer of a specific group among a plurality of the printers connected to the information processing system.

According to a sixth aspect of the present disclosure, in the information processing system according to the fifth aspect, the processor may be configured to: acquire information of a group; and transmit the notification only to the printer of the acquired group among a plurality of the printers connected to the information processing system.

According to a seventh aspect of the present disclosure, there is provided a program causing a computer to execute a process including: receiving, from a server on outside, processing information of print processing requested by a user to the server and storing the processing information; transmitting the processing information to a printer in response to an instruction from the printer; and when a failure has occurred in a communication between an information processing system and the server, transmitting a notification indicating that the failure has occurred to the printer and thus notifying the printer that the failure has occurred.

With the information processing system of the first aspect, it is possible to cause the user operating the printer to recognize that a failure has occurred in the communication with the server in the information processing system that receives, from the server, processing information of print processing requested by the user, stores the processing information, and transmits the processing information to the printer in response to an instruction from the printer.

With the information processing system of the second aspect, it is possible to cause only a specific user to recognize that a failure has occurred in the communication with the server.

With the information processing system of the third aspect, it is possible to cause only the user who has used the server to recognize that a failure has occurred in the communication with the server.

With the information processing system of the fourth aspect, it is possible to transmit the notification only to the specific printer.

With the information processing system of the fifth aspect, it is possible to transmit the notification only to the printer of the specific group.

With the information processing system of the sixth aspect, it is possible to transmit the notification only to the printer of the group of which the information is acquired.

With the program of the seventh aspect, it is possible to cause the user operating the printer to recognize that a failure has occurred in the communication with the server in the information processing system that receives, from the server, processing information of print processing requested by the user, stores the processing information, and transmits the processing information to the printer in response to an instruction from the printer.

### Brief Description of the Drawings

Exemplary embodiments of the present disclosure will be described in detail based on the following figures, wherein:
Fig. 1 is a diagram illustrating a system configuration of a cloud print system according to an exemplary embodiment of the present disclosure;
Fig. 2 is a block diagram illustrating a hardware configuration of a main image forming apparatus in the above-described cloud print system;
Fig. 3 is a diagram illustrating processing in a normal state of the above-described cloud print system;
Fig. 4 is a diagram illustrating processing performed when a failure has occurred in the above-described cloud print system;
Fig. 5 is a flowchart illustrating a process flow at the time of transmitting a failure occurrence notification in the main image forming apparatus; and
Fig. 6 is a flowchart illustrating a process flow regarding a failure occurrence notification in a sub image forming apparatus.

### Detailed Description

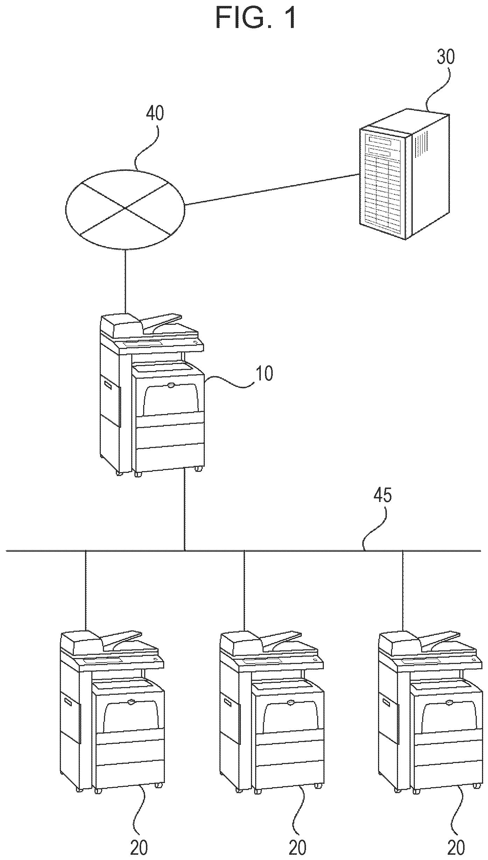

An exemplary embodiment for implementing the technology of the present disclosure will be described below in detail with reference to the drawings. Fig. 1 is a diagram illustrating a system configuration of a cloud print system according to an exemplary embodiment.

As illustrated in Fig. 1, the cloud print system according to the present exemplary embodiment includes a main image forming apparatus 10, a sub image forming apparatus 20, and a management server 30.

The main image forming apparatus 10 is what is called a multifunction peripheral having a plurality of functions such as a copy function, a print function, a fax function, and a scan function. The main image forming apparatus 10 is connected to the management server 30 via the Internet 40. The main image forming apparatus 10 is an example of an information processing system according to the technology of the present disclosure.

The sub image forming apparatus 20 is also what is called a multifunction peripheral having a plurality of functions such as a copy function, a print function, a fax function, and a scan function. The sub image forming apparatus 20 is connected to the main image forming apparatus 10 via a local network 45. The sub image forming apparatus 20 is an example of a printer according to the technology of the present disclosure.

The management server 30 is a server to provide the cloud print service.

In the cloud print system according to the present exemplary embodiment, a user transmits a print job to the management server 30 from a user terminal (not illustrated) such as a smartphone or a personal computer. The print job corresponds to print processing according to the technology of the present disclosure.

The main image forming apparatus 10 receives, from the management server 30, processing information of the print job transmitted to the management server 30 by the user and stores the processing information.

Then, the user causes the main image forming apparatus 10 or the sub image forming apparatus 20 to execute printing of the print job transmitted by the user.

Here, when the user causes the main image forming apparatus 10 to execute printing, the main image forming apparatus 10 executes printing based on the processing information of the print job stored in the main image forming apparatus 10.

When the user causes the sub image forming apparatus 20 to execute printing, the sub image forming apparatus 20 transmits, to the main image forming apparatus 10, an instruction to transmit the processing information of the print job transmitted by the user. The main image forming apparatus 10 transmits the processing information to the sub image forming apparatus 20 in response to the instruction from the sub image forming apparatus 20. The sub image forming apparatus 20 executes printing based on the processing information received from the main image forming apparatus 10.

That is, in the cloud print system according to the present exemplary embodiment, the main image forming apparatus 10 and the sub image forming apparatus 20 are connected to each other via the local network 45. Then, what is called pull printing is performed, in which the processing information of the print job stored in the main image forming apparatus 10 is acquired and printed in the sub image forming apparatus 20.

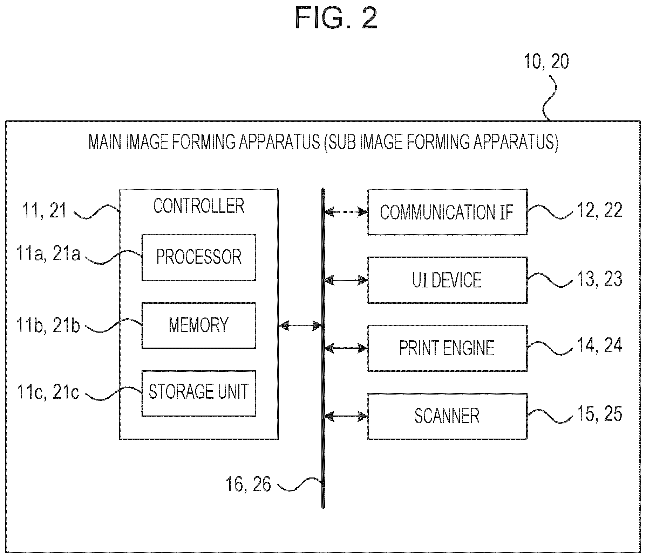

Next, a hardware configuration of the main image forming apparatus 10 according to the present exemplary embodiment will be described. Fig. 2 is a block diagram illustrating a hardware configuration of the main image forming apparatus 10.

As illustrated in Fig. 2, the main image forming apparatus 10 includes a controller 11, a communication interface (abbreviated as IF) 12, a user interface (abbreviated as UI) device 13 including a touch panel or a liquid crystal display and a keyboard, a print engine 14, and a scanner 15. These components are connected to one another via a control bus 16.

The controller 11 includes a processor 1 1a, a memory 11b, and a storage unit 11c. The processor 11a executes predetermined processing based on a control program that is read from the storage unit 11c and loaded to the memory 11b. The storage unit 11c includes, for example, a read only memory (ROM), a hard disk drive (HDD), or a solid state drive (SSD). The storage unit 11c stores a control program, necessary software, data, and the like. In addition, the storage unit 11c stores processing information of a print job received from the management server 30.

In the description according to the present exemplary embodiment, the processor 11a reads and executes the program stored in the storage unit 11c, but the present disclosure is not limited thereto. The program may be provided in a form of being recorded on a computer-readable recording medium. For example, the program may be provided in a form of being recorded in an optical disc such as a compact disc (CD)-read only memory (ROM) or a digital versatile disc (DVD)-ROM, or in a form of being recorded in a semiconductor memory such as a universal serial bus (USB) memory or a memory card. Further, the program may be acquired from an external device via a communication line.

The communication IF 12 performs data transmission and reception with an external device or the like. The UI device 13 receives an instruction input from a user. The print engine 14 prints an image on a recording medium such as a print sheet through processes such as charging, exposure, development, transfer, and fixing. The scanner 15 reads a document loaded in the main image forming apparatus 10 as image data.

Next, a hardware configuration of the sub image forming apparatus 20 according to the present exemplary embodiment will be described. As illustrated in Fig. 2, the sub image forming apparatus 20 includes a controller 21, a communication interface (abbreviated as IF) 22, a user interface (abbreviated as UI) device 23 including a touch panel or a liquid crystal display and a keyboard, a print engine 24, and a scanner 25. These components are connected to each other via a control bus 26.

Since the hardware configuration of the sub image forming apparatus 20 is the same as that of the main image forming apparatus 10 described above, a detailed description thereof will be omitted.

In the cloud print system described above, a failure may occur in the communication between the main image forming apparatus 10 and the management server 30 due to, for example, the occurrence of a fault in the management server 30. When such a failure has occurred, the main image forming apparatus 10 and the sub image forming apparatus 20 cannot execute printing of the print job transmitted by the user. As a result, the user's convenience is impaired.

There is a demand for the user to know the cause when printing cannot be executed.

In the main image forming apparatus 10, it is possible to detect that a failure has occurred in the communication with the management server 30. Therefore, it is possible to notify the user who uses the main image forming apparatus 10 of the reason why the printing cannot be executed.

However, in the sub image forming apparatus 20, it is difficult to detect that a failure has occurred in the communication between the main image forming apparatus 10 and the management server 30. Therefore, it is difficult to notify the user who uses the sub image forming apparatus 20 of the reason why the printing cannot be executed.

Therefore, when a failure has occurred in the communication between the main image forming apparatus 10 and the management server 30, the controller 11 in the main image forming apparatus 10 according to the present exemplary embodiment transmits a notification indicating that the failure has occurred to the sub image forming apparatus 20 and thus notifies the sub image forming apparatus 20 that the failure has occurred.

Here, processing at the time of printing from the sub image forming apparatus 20 in the cloud print system according to the present exemplary embodiment will be described in detail.

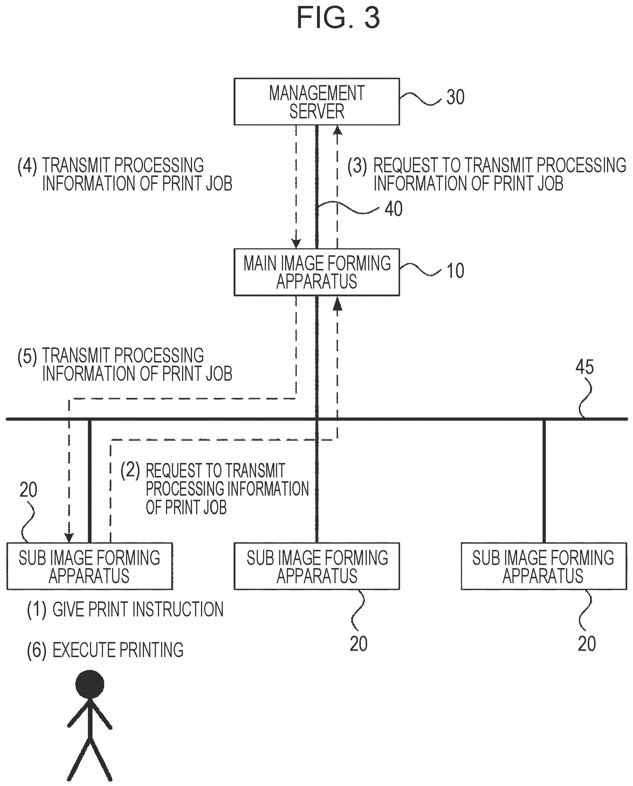

First, processing in a normal state of the cloud print system will be described. As illustrated in Fig. 3, the user logs in to the sub image forming apparatus 20 capable of pull printing and gives a print instruction of the print job transmitted by the user.

Subsequently, the sub image forming apparatus 20 requests the main image forming apparatus 10 to transmit the processing information of the print job.

Subsequently, the main image forming apparatus 10 requests the management server 30 to transmit the processing information of the print job.

Subsequently, the management server 30 transmits, to the main image forming apparatus 10, the processing information of the print job for which a transmission request has been made.

Subsequently, the main image forming apparatus 10 transmits, to the sub image forming apparatus 20, the processing information of the print job for which a transmission request has been made.

Finally, the sub image forming apparatus 20 executes printing based on the received processing information of the print job.

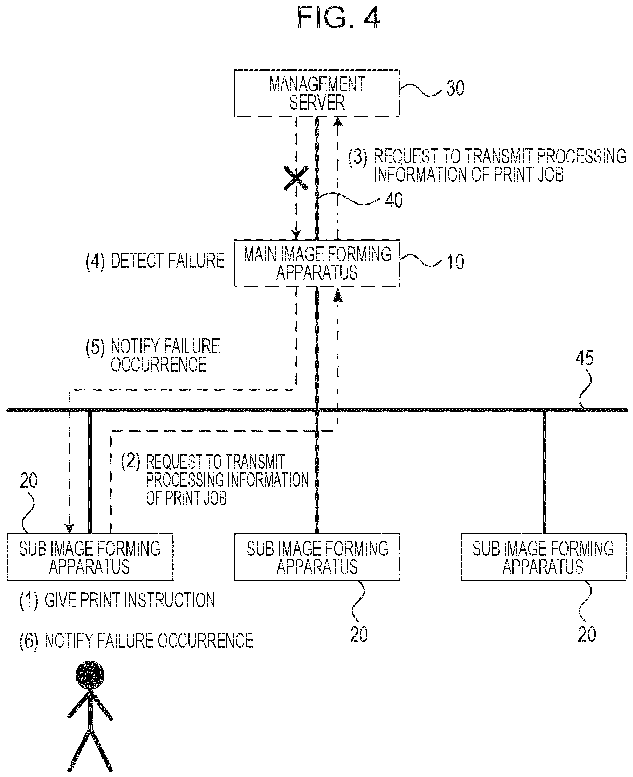

Next, processing performed when a failure has occurred in the cloud print system will be described. As illustrated in Fig. 4, the user logs in to the sub image forming apparatus 20 capable of pull-printing and gives a print instruction of the print job transmitted by the user.

Subsequently, the sub image forming apparatus 20 requests the main image forming apparatus 10 to transmit the processing information of the print job.

Subsequently, the main image forming apparatus 10 requests the management server 30 to transmit the processing information of the print job.

Here, when a failure has occurred in the communication between the main image forming apparatus 10 and the management server 30, the main image forming apparatus 10 cannot receive the processing information of the print job from the management server 30. Accordingly, the main image forming apparatus 10 detects that a failure has occurred in the communication between the main image forming apparatus 10 and the management server 30.

Subsequently, the main image forming apparatus 10 notifies the sub image forming apparatus 20 that a failure has occurred in the communication between the main image forming apparatus 10 and the management server 30.

Finally, the sub image forming apparatus 20 notifies the user that a failure has occurred in the communication between the main image forming apparatus 10 and the management server 30.

For the notification of a failure occurrence by the sub image forming apparatus 20, for example, a touch panel or a liquid crystal display included in the sub image forming apparatus 20 may display the failure content. Alternatively, the notification may be made by voice. In addition, the notification may be made by an indicator such as a light emitting diode (LED). In addition, the present disclosure is not limited to the above, and any mode may be adopted.

With such a configuration, even when a failure has occurred in the communication between the main image forming apparatus 10 and the management server 30 and printing cannot be executed, it is possible to notify the sub image forming apparatus 20 of the reason why the printing cannot be executed.

According to the present exemplary embodiment, when a failure has occurred, the controller 11 may refer to the user information on the user who has logged in to the sub image forming apparatus 20 and determine whether to transmit the notification to the sub image forming apparatus 20.

In this case, when a failure has occurred, the controller 11 may transmit the notification to the sub image forming apparatus 20 only in a case where the user who has requested the management server 30 to perform processing in the past has logged in to the sub image forming apparatus 20.

Further, the controller 11 may transmit the notification only to the specific sub image forming apparatus 20 among the plurality of sub image forming apparatuses 20 connected to the main image forming apparatus 10.

In addition, the controller 11 may transmit the notification only to the sub image forming apparatus 20 of a specific group among the plurality of sub image forming apparatuses 20 connected to the main image forming apparatus 10.

In this case, the controller 11 may acquire the information of a group and transmit the notification only to the sub image forming apparatuses 20 of the acquired group among the plurality of sub image forming apparatuses 20 connected to the main image forming apparatus 10.

The information of the group may be acquired from the management server 30, for example. Further, in the main image forming apparatus 10, the user may arbitrarily specify the setting. In addition, the present disclosure is not limited to the above, and any mode may be adopted.

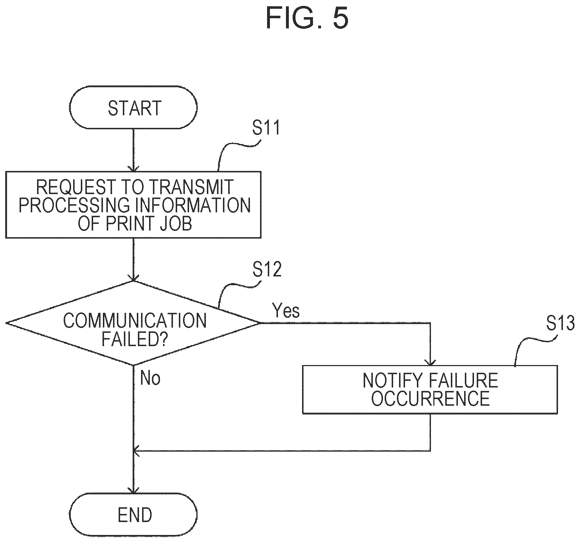

Next, a process flow at the time of transmitting a failure occurrence notification in the main image forming apparatus 10 will be described with reference to the flowchart of Fig. 5.

First, in step S11, the controller 11 of the main image forming apparatus 10 requests the management server 30 to transmit the processing information of the print job.

Subsequently, in step S12, the controller 11 determines whether the communication with the management server 30 has failed.

When it is determined in step S12 that the communication with the management server 30 has failed, in step S13, the controller 11 notifies the sub image forming apparatus 20 that a failure has occurred in the communication between the main image forming apparatus 10 and the management server 30 and ends the process regarding the failure occurrence notification.

When it is determined in step S12 that the communication with the management server 30 has not failed, the controller 11 then ends the process regarding the failure occurrence notification.

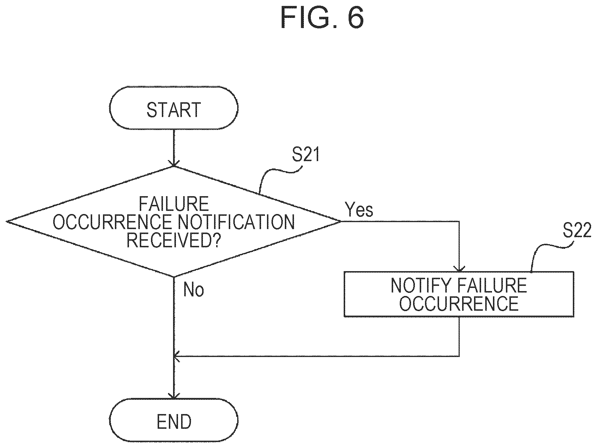

Next, a process flow regarding the failure occurrence notification in the sub image forming apparatus 20 will be described with reference to a flowchart of Fig. 6.

First, in step S21, the controller 21 of the sub image forming apparatus 20 determines whether a failure occurrence notification has been received from the main image forming apparatus 10.

When it is determined in step S21 that a failure occurrence notification has been received, in step S22, the controller 21 notifies the user that a failure has occurred in the communication between the main image forming apparatus 10 and the management server 30 and ends the process regarding the failure occurrence notification.

When it is determined in step S21 that the failure occurrence notification has not been received, the controller 21 then ends the process regarding the failure occurrence notification.

### <Modification>

Although the cloud print system according to the exemplary embodiment of the present disclosure has been described above, the technology of the present disclosure is not limited to the above-described exemplary embodiment and can be changed as appropriate.

In each exemplary embodiment, the processor refers to a processor in a broad sense and includes general-purpose processors (for example, a central processing unit (CPU) and the like) and dedicated processors (for example, a graphics processing unit (GPU), an application specific integrated circuit (ASIC), a field programmable gate array (FPGA), and a programmable logic device).

In addition, the operation of the processor according to the exemplary embodiment described above may be performed not only by one processor but also by a plurality of processors existing at physically separated positions in cooperation with each other. In addition, the order of each operation of the processor is not limited to the order described in each of the exemplary embodiments, and may be changed as appropriate.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising:
   a processor configured to:
   receive, from a server on outside, processing information of print processing requested by a user to the server and store the processing information;
   transmit the processing information to a printer in response to an instruction from the printer; and
   when a failure has occurred in a communication between the information processing system and the server, transmit a notification indicating that the failure has occurred to the printer and thus notify the printer that the failure has occurred.
(((2))) The information processing system according to (((1))), wherein the processor is configured to, when the failure has occurred, refer to user information regarding a user who has logged in to the printer and determine whether to transmit the notification to the printer.
(((3))) The information processing system according to (((2))), wherein the processor is configured to, when the failure has occurred, transmit the notification to the printer only in a case where a user who has requested the server to perform processing in the past has logged in to the printer.
(((4))) The information processing system according to any one of (((1))) to (((3))), wherein the processor is configured to transmit the notification only to a specific printer among a plurality of the printers connected to the information processing system.
(((5))) The information processing system according to any one of (((1))) to (((3))), wherein the processor is configured to transmit the notification only to the printer of a specific group among a plurality of the printers connected to the information processing system.
(((6))) The information processing system according to (((5))), wherein the processor is configured to:
   acquire information of a group; and
   transmit the notification only to the printer of the acquired group among a plurality of the printers connected to the information processing system.
(((7))) A program causing a computer to execute a process comprising:
   receiving, from a server on outside, processing information of print processing requested by a user to the server and storing the processing information;
   transmitting the processing information to a printer in response to an instruction from the printer; and
   when a failure has occurred in a communication between an information processing system and the server, transmitting a notification indicating that the failure has occurred to the printer and thus notifying the printer that the failure has occurred.

With the information processing system of (((1))), it is possible to cause the user operating the printer to recognize that a failure has occurred in the communication with the server in the information processing system that receives, from the server, processing information of print processing requested by the user, stores the processing information, and transmits the processing information to the printer in response to an instruction from the printer.

With the information processing system of (((2))), it is possible to cause only a specific user to recognize that a failure has occurred in the communication with the server.

With the information processing system of (((3))), it is possible to cause only the user who has used the server to recognize that a failure has occurred in the communication with the server.

With the information processing system of (((4))), it is possible to transmit the notification only to the specific printer.

With the information processing system of (((5))), it is possible to transmit the notification only to the printer of the specific group.

With the information processing system of (((6))), it is possible to transmit the notification only to the printer of the group of which the information is acquired.

With the program of (((7))), it is possible to cause the user operating the printer to recognize that a failure has occurred in the communication with the server in the information processing system that receives, from the server, processing information of print processing requested by the user, stores the processing information, and transmits the processing information to the printer in response to an instruction from the printer.

## Claims

1. An information processing system comprising:
a processor configured to:
receive, from a server on outside, processing information of print processing requested by a user to the server and store the processing information;
transmit the processing information to a printer in response to an instruction from the printer; and
when a failure has occurred in a communication between the information processing system and the server, transmit a notification indicating that the failure has occurred to the printer and thus notify the printer that the failure has occurred.

2. The information processing system according to claim 1, wherein the processor is configured to, when the failure has occurred, refer to user information regarding a user who has logged in to the printer and determine whether to transmit the notification to the printer.

3. The information processing system according to claim 2, wherein the processor is configured to, when the failure has occurred, transmit the notification to the printer only in a case where a user who has requested the server to perform processing in the past has logged in to the printer.

4. The information processing system according to any one of claims 1 to 3, wherein the processor is configured to transmit the notification only to a specific printer among a plurality of the printers connected to the information processing system.

5. The information processing system according to any one of claims 1 to 3, wherein the processor is configured to transmit the notification only to the printer of a specific group among a plurality of the printers connected to the information processing system.

6. The information processing system according to claim 5, wherein the processor is configured to:
acquire information of a group; and
transmit the notification only to the printer of the acquired group among a plurality of the printers connected to the information processing system.

7. A program causing a computer to execute a process comprising:
receiving, from a server on outside, processing information of print processing requested by a user to the server and storing the processing information;
transmitting the processing information to a printer in response to an instruction from the printer; and
when a failure has occurred in a communication between an information processing system and the server, transmitting a notification indicating that the failure has occurred to the printer and thus notifying the printer that the failure has occurred.
